# EUROPEAN PATENT APPLICATION

(11) **EP 4 265 407 A1**
(43) Date of publication of application: **25.10.2023**
(21) Application number: 22169012.6
(22) Date of filing: 20.04.2022
(51) Int. Cl.: B32B 7/027, B32B 5/02, B32B 5/18, B32B 5/32, B32B 7/12, B32B 9/04, B32B 17/06, B32B 19/04

(54) **THERMAL INSULATION COMPOSITE**

(71) Applicant: BASF SE, 67056 Ludwigshafen am Rhein (DE)
(72) Inventor: LIED, Fabian, 49448 Lemfoerde (DE); KIM, Dennis, 30173 Hannover (DE); KLINKEBIEL, Arne, 49448 Lemfoerde (DE); LOELSBERG, Wibke, 67056 Ludwigshafen (DE); GUENTHER, Eva, 83308 Trostberg (DE)
(74) Representative: BASF IP Association

(57) **Abstract**

The present invention provides a thermal insulation composite comprising
i) at least one aerogel layer A),
ii) at least one binder layer B),
iii) at least one fire resistant layer C), and
iv) optionally at least one compressible layer D).
and a process for producing the thermal insulation composite and its use building and construction, refrigeration appliance, electronic devices, aerospace and batteries.

## Description

The present invention relates to a thermal insulation composite comprising
i) at least one aerogel layer A),
ii) at least one binder layer B),
iii) at least one fire-resistant layer C), and
iv) optionally at least one compressible layer D);
and a process for producing the thermal insulation composite and its use building and construction, refrigeration appliance, electronic devices, aerospace and batteries.

Multilayer composites based on reinforced silica aerogel blankets are very attractive solutions to address applications with these challenging requirements. Unfortunately, the production of thin fiber-reinforced silica aerogel blankets is economically not viable. Hence, a postproduction treatment such as slicing, or skiving becomes necessary. To date it is impossible to achieve thicknesses of below 5 mm using these techniques on fiber reinforced silica aerogel blankets, while maintaining their mechanical and thermal performance. This is due to material failures (e.g. tearing, fringing, etc.) and high levels of dustiness leading to strong inhomogeneities in product dimensions, thermal and mechanical properties, etc. Additionally, fiber reinforced silica aerogel blankets are challenging substrates when it comes to the application of adhesives or lamination of additional layers to their surface. This is due to their dustiness which negatively impacts adhesive properties and their low tensile strength perpendicular to their surface (fibers being torn out under stress).

US 9097377 B2 discloses lightweight aerogel insulating material with excellent insulation for use in clothing material including an insulating layer containing aerogel particles, a thermoplastic elastomer with low glass transition temperature as adhesive-coating layer located at both surfaces of the insulating layer, and a lamination film surrounding the adhesive-coating layer to reduce migration of aerogel particles

US 2017/0210092 discloses an insulating structure comprising at least one microporous layer and at least one a monolithic aerogel structure extending through a plurality of micropores of a microporous layer. The microporous layer is preferably an expanded fluoropolymer film, such as ePTFE film. Optionally the microporous facing layer is adjacent to a porous base layer, such as an open cell foam or a textile layer. Both layers function as reinforcing material for the aerogel.

WO 2016/053399 discloses the production of highly durable, flexible fiber-reinforced aerogels with a thickness of less than 10 mm, which can be used as insulation in thermal battery applications. Preferably inorganic silica aerogels are applied to non-woven fiber reinforcement materials. Insulation materials based on inorganic silica generally show problems with dusting. Since the fiber diameter is much larger than the cells of the aerogel the resulting fiber-reinforced aerogel generally forms a non-uniform network structure.

US 2014/0287641 discloses layered composites of aerogel materials and non-aerogel materials, such as fibrous sheet or laminated plies, including mechanically strong composites with multifunctional properties for various applications, such as insulation for garments, ballistic materials, space applications, lightweight structures for aircraft and automotive parts or sport equipment. Properties, such as flexibility and thermal conductivity of the layered composites depend strongly on the type, amount and thickness of the non-aerogel material in the layered composite.

US 2019/0374921 discloses a silica-based aerogel framework, reinforced with an open-cell macroporous framework that are durable and easy to handle, have favorable insulation, combustion and flame-resistance properties.

US 2021/0163303 and US 2021/0167438 disclose a heat control member and system for electric vehicle thermal management that can include a plurality of layers of a silica-based aerogel composition or reinforced aerogel composition that are durable and easy to handle, which have favorable resistance to heat propagation and fire propagation while minimizing thickness and weight of materials used, and that also have favorable properties for compressibility, compressional resilience, and compliance. A layer of thermally conductive or thermally capacitive material may be disposed adjacent to the layer of reinforced aerogel composition.

WO 2021/81901 discloses an insulating article comprising a core layer containing a plurality of non-meltable fibers; and optionally at least one reinforcement layer disposed on the core layer, In a three-layer sandwich configuration the peripheral edges of the thermal insulator may be permanently compressed to form respective edge seals.

DE 10 2019 129473 A1 relates to a cell module for a high-voltage memory, comprising two or more cells for storing electrical energy; and one or more thermal blockages, each disposed between two adjacent cells, each containing an aerogel and exhibiting a thermally insulating effect between the respective adjacent cells.

The present invention was made in view of the prior art described above, and the object of the present invention is to provide a thin, flexible, non-dusting and non-combustible thermal insulation composite with low thermal conductivity, as well as an easy process for its preparation and application.

To solve the problem, the present invention provides a thermal insulation composite comprising
i) at least one aerogel layer A),
ii) at least one binder layer B),
iii) at least one fire-resistant layer C), and
iv) optionally at least one compressible layer D).

Preferably the thermal insulation composite consists of at least one aerogel layer A), optionally at least one compressible layer D), two binder layers B), and two fire resistant layers C). More preferably the thermal insulation composite has the layer structure C-B-A-B-C, C-B-A-D-B-C or C-B-D-A-D-B-C.

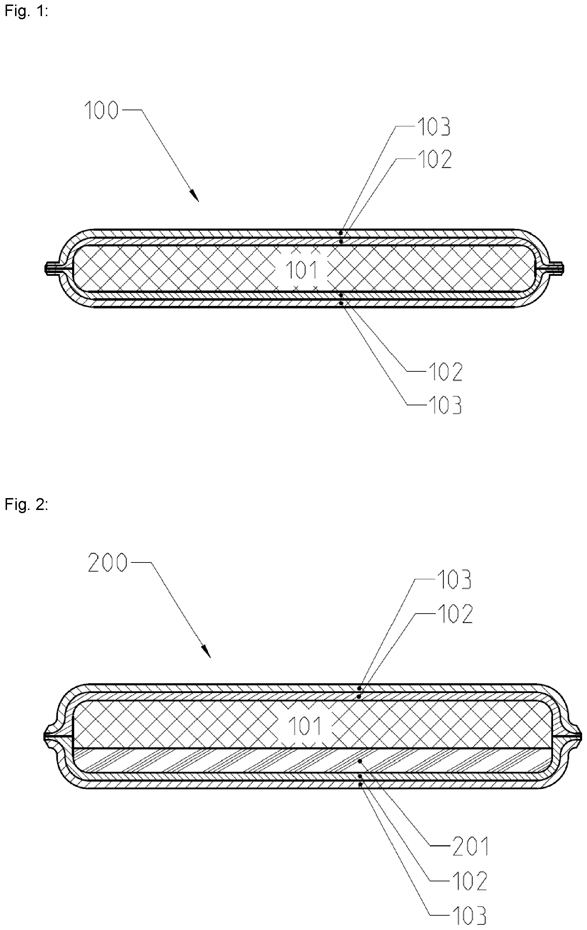

In a preferred embodiment the at least one aerogel layer A) and optionally at least one compressible layer D) is sandwiched between and fully encapsulated by the binder layer B) and the fire-resistant layer C) as shown in Fig 1 to Fig. 3.

Preferably the thermal insulation composite has a total thickness in the range from 0.1 to 10 mm, more preferably in the range from 1 to 5 mm

Preferably the thermal insulation composite is non-combustible, electrically non-conducting, temperature resistant at temperatures of 800°C or above and has a thermal conductivity of 20 mW/m*K or less.

### Aerogel layer A)

The aerogel layer A) is preferably an inorganic aerogel composite material with a monolithic aerogel structure. More preferably the aerogel composite material comprises at least the components (a1) to (a3):
(a1) at least one silica aerogel,
(a2) at least one reinforcement and
(a3) at least one flame retardant.

Silica aerogels (a1) are known in principle to those skilled in the art. They are usually prepared from gel precursors by sol-gel-processes. Examples for suitable gel precursors are metal silicates such as sodium silicate and potassium silicate, and alkoxysilanes such as tetramethoxysilane (TMOS) and tetraethoxysilane (TEOS).

The aerogel layer a) may comprise as reinforcement (a2) one or more fibrous materials or an open-celled foam. Preferred fibrous material are lofty battings or microfibers including any fiber-forming material selected from fiberglass, quartz, polyester (PET), polyethylene, polypropylene, polybenzimidazole (PBI), polyphenylenebenzo-bisoxasole (PBO), polyetherether ketone (PEEK), polyarylate, polyacrylate, polytetrafluoroethylene (PTFE), poly-metaphenylene diamine (Nomex), poly-paraphenylene terephthalamide (Kevlar), ultra-high molecular weight polyethylene (UHMWPE) e.g. Spectra^{™}, novoloid resins (Kynol), polyacrylonitrile (PAN), PAN/carbon, carbon fibers or any combination thereof.

Preferably the at least one aerogel layer A) comprises an open-celled polymer foam such as an open-celled melamine-formaldehyde foam with a density in the range from 5 to 15 kg/m³ as reinforcement (a2). Preferably the melamine-formaldehyde foam has an open-cell content measured according to DIN ISO 4590 of more than 50 %, preferable of 95 % or higher, most preferably of 98 to 100%. The aerogel layer A), which is reinforced with an open-celled polymer foam can be sliced or skived easily to a thickness of 5 mm or less while maintaining mechanical and thermal properties.

The at least one flame retardant (a3) is preferably selected from inorganic compounds, more preferably from the group consisting of clay minerals, low melting glasses, metal oxides, metal oxide hydroxides, metal hydroxides, carbonates and hydrocarbonates, most preferably from clay minerals, metal oxides, metal oxide hydroxides and metal hydroxides.

Preferably the aerogel layer A) comprises 30 - 70 wt.-% of component (a1), 3 - 10 wt.-% of component (a2) and 27 to 60 wt.-% of component (a3). The sum of the components (a1) to (a3) are typically 100%.

Particular preferably the aerogel layer A) consists of the components (a1), (a2) and (a3). Most preferably the aerogel layer A) consists of 30 - 70 wt.-% of component (a1), 3 - 10 wt.-% of component (a2) and 27 to 60 wt.-% of component (a3) with the sum of components (a1), (a2) and (a3) are 100%.

The aerogel layer A) has preferably an apparent density in the range from 100 to 500 kg/m³, more preferably in the range from 150 to 400 kg/m³, determined according to EN 1602. The thermal conductivity A of the aerogel layer A) is typically below 30 mW/m*K, preferably below 20 mW/m*K determined at 10°C according to DIN EN 12667:2001-05.

Preferably the aerogel layer A) is non-flammable and class A2-s1, d0 according to DIN EN 13501-1. A suitable commercial product is Slentex^{®}. The heat of combustion is preferably 3.0 MJ/kg or less, determined according to EN ISO 1716:2010-11.

In a preferred embodiment the aerogel layer A) has hydrophobic properties and a liquid water uptake of 10 wt-% or less, based on the total weight of the aerogel layer A).

In an especially preferred embodiment, the aerogel layer A) has a liquid water uptake of ≤ 10 % by weight, a thermal conductivity of λ of ≤ 0.020 W/(mK) and a heat of combustion of ≤ 3.0 MJ/kg.

The aerogel layer A) may be prepared by a sol-gel process through hydrolysis and condensation of metal alkoxide precursors in an alcohol-based solvent and subsequent drying as described in US 2002/0094426 and WO 2016/053399.

### Binder layer B)

The binder layer B) is used to attach the fire-resistant layer C) to the aerogel layer A) and/or optional compressible laver D). Preferably a thermoplastic polymer is used as binder layer. More preferably a thermoplastic polymer with a melting point of 200°C or less and a glass transition temperature of 10°C or less is used. Most preferably the at least one binder layer B) consists of a polyamide fiber web or a thermoplastic elastomer. The binder layer B) makes the thermal insulation composite less dusty compared to using fiber reinforced silica aerogel blankets alone.

### Fire-resistant layer C)

The fire-resistant layer C) is preferably used as cover layer of the thermal insulation composite. Preferably a foil with a thickness in the range from 0.1 to 0.16 mm is used as fire-resistant layer C. The total area weight is preferably in the range from 140 to 200 g/m2. It has a breakdown voltage of 1.5 kV or higher. Preferably the fire-resistant layer is a silicate with a silicate content of 60-90 %(w/w), a glass content of 0-20 %(w/w) and a resin content of 0-10 %(w/w), Most preferably the at least one fire-resistant layer C) consists of mica and/or glass.

### Compressible layer D)

Microcellular polyurethanes may be used as compressive layer D). The synthesis of microcellular polyurethane is known and described in e.g. WO 97/10278, WO02/081537 or WO 2018/087387. Preferred cellular polyisocyanate-polyaddition products have at least one of the following properties: a density according to DIN EN ISO 845 between 200 and 1100 kg/m3, preferred between 270 and 900 kg/m3, a tear strength according to DIN EN ISO 845 of more than 2 N/mm2, preferred of more than 4 N/mm2, especially preferred between 4 und 8 N/mm2, an elongation at break according to DIN EN ISO 1798 of ≥ 200 %, preferred ≥ 230 %, especially preferred between 300 % and 700 % and/or a tear propagation resistance according to DIN ISO 34-1 B (b) of ≥ 6 N/mm, preferred of ≥ 8 N/mm, especially preferred ≥ 10 N/mm. Preferably, the cellular polyisocyanate-polycondensate fulfills two, more preferred three of these material properties, especially preferred all four of the aforementioned material properties. The elastomers based on cellular polyisocyanate-polycondensate products are usually produced in a mold, in which one combines the reactive starting materials. As molds, the generally used molds may be applied.

Preferably the at least one compressible layer D) is selected from of a microcellular polyurethane elastomer with a density in the range from 350 to 650 kg/m³ and a pore volume in the range from 50 to 63%.

Suitable as compressible layer D) are also viscoelastic polyurethane foams, such open-celled polyurethane foams with a density according to DIN EN ISO 845 in the range from 50 to 300 kg/m³. Preferably the polyurethane foams have an open-cell content measured according to DIN ISO 4590 of more than 50 %, preferable of 95 % or higher, most preferably of 98 to 100%.

The compressible layer D) improves flexibility, especially at low thickness and compressibility of the thermal insulation composite compared to fiber rein-forced silica aerogel blankets alone.

The thermal insulation composite according to the invention may be prepared by a process comprising the step of laminating the at least one binder layer B) and at least one fire resistant layer C) and optionally the at least one layer D) onto at least one surface of the aerogel layer A).

A preferred process comprises the steps of
a) providing a aerogel layer A) with a thickness in the range from 1 to 8 mm
b) applying binder layers B) and fire-resistant layers C) on two opposite surfaces of the aerogel layer A) with overlapping areas,
c) laminating the binder layers B) and fire-resistant layers C) and optionally the at least one layer D) onto the aerogel layer A) and pressing the overlapping aeras together to fully encapsulate the aerogel layer A).

The thermal insulation composite according to the invention is thin, flexible, non-dusting and non-combustible with low thermal conductivity, as well as an easy process for its preparation and application

The thermal insulation composite according to the invention may be used in building and construction, refrigeration appliance, electronic devices, aerospace and batteries.

### Brief description of drawings

Fig. 1 is a schematic drawing of first embodiment of a thermal insulating composite (100) with an aerogel layer A) (101) sandwiched between and fully encapsulated by the binder layers B) (102) and the fire-resistant layers C) (103).
Fig. 2 is a schematic drawing of a second embodiment of a thermal insulating composite (200) with a core of an aerogel layer A) (101) and an elastomeric layer D) (201) sandwiched between and fully encapsulated by the binder layers B) (102) and the fire-resistant layers C) (103).
Fig. 3 is a schematic drawing of a third embodiment of a thermal insulating composite (300) with core of an aerogel layer A) (101) and between to elastomeric layers D) (201) sandwiched between and fully encapsulated by the binder layers B) (102) and the fire-resistant layers C) (103).

The thermal insulation material according to the invention is suitable for use in construction and refrigeration appliance industry or for the use in electronic devices as well as batteries or aerospace applications, preferably as thermal insulation material for interior insulation, shutter box, window fanning, refrigerators, electronic devices, smart phones, tablets, notebooks or rechargeable batteries.

Because of the combination of heat resistance, non-combustibility, flexibility, compressibility and low thickness the thermal insulation composite according to the invention are especially suited as cell-to-cell insulation layer and modules in battery packs for use in electromobility applications.

### Examples

Hereinafter, the present invention is described in more detail and specifically with reference to the Examples, which however are not intended to limit the present invention.

Materials used:

| | | |
|---|---|---|
| A1 | SLENTEX | Glas fiber reinforced silica-based aerogel mat |
| A2 | OCMF-SA | Open-cell melamine formaldehyde reinforced silica-based aerogel |
| B1 | Polyamide based adhesive | |
| B2 | Polyamide web | |
| C1 | Mica foil, 0.13 mm thick foil with 120 g/m² mica, 28 g/m² glass and 13 wt.-% resin | |
| C2 | Ceramic foil | |
| D1 | Microporous polyurethane foam: Cellasto^{®} sheet, 0.8 mm | |
| D2 | Open cell polyurethane foam, 1mm | |

### Test methods:

Resistant to torch
Hot press test (600°C, 6 bar)

The thermal conductivity was measured according to DIN EN 12667:2001-05 with a heat flow meter from Hesto (Lambda Control A50) at 10°C. Laminated and non-laminated sheets of 1 - 2 mm thickness were measured as stacks of 4 to 10 sheets (15 cm * 15 cm) depending on their thickness.
Compression set at 40%

All the compression set value measurements for assessing the elastic properties were carried out as follows:
A rectangular laminate sample (cut into dimensions: 40 mm x 40 mm, height: 25 mm) is soaked in deionized water and compressed for 60 min between two steel plates (1 cm thickness) to either 20 % (5 mm) or 8 % (2 mm) of its initial height.

The compression set is determined by the following formula: C = (h0 - hi) / h0, where h0 is the initial height before compression and hi is the sample thickness after compression. C0.5 denotes the compression set after 30 min and C24 after 24 hours, respectively.

### Example 1: Preparation of a thermal insulation composite

A thermal insulation composite as shown in Figure 1 in 2-3 mm thickness comprising a glass fiber reinforced aerogel blanket (SLENTEX, 2 mm thickness) as layer A), fully surrounded by a polyamide-based adhesive layer B) and two sheets (MICA foils) as layer C) with 0.10 - 0.16 mm thickness each and area weight of 150 - 190 g/m², consisting of at least a glass layer and glimmer sheet for the use as isolator sheet for cell-cell, module-module or battery pack thermal propagation prevention was prepared as follows:
1. A 10 mm SLENTEX^{®} mat is skived to a thickness of approximately 2 mm by waterjet cutting. dried in an oven
2. Polyamide web and Mica foil, with slightly higher dimensions are put onto the SLENTEX^{®} sample
3. MICA foil is applied and laminated via roll lamination, in a way, that Polyamide/Mica foil is laminated to the Slentex^{®} surface and the overlapping sides of polyamide /Mica to each other.

### Example 2: Preparation of a thermal insulation composite with improved compressibility

A thermal insulation composite as shown in Figure 2 in 3-4 mm thickness comprising a glass fiber reinforced aerogel blanket (SLENTEX^{®}, 2 mm thickness) as layer A), a microporous polyurethane foam (Cellasto^{®}, 0.8 mm thickness) as layer D) with a density of 300 kg/m³, fully surrounded by a polyamide-based adhesive layer B) and two sheets (MICA foils) as layer C) with 0.10 - 0.16 mm thickness each and area weight of 150 - 190 g/m², consisting of at least a glass layer and glimmer sheet for the use as isolator sheet for cell-cell, module-module or battery pack thermal propagation prevention was prepared as follows:
1. A 10 mm SLENTEX^{®} mat is skived to a thickness of approximately 2 mm by waterjet cutting. dried in an oven
2. A 0.8 mm Cellasto^{®} sheet is placed on top of the 2 mm SLENTEX^{®} mat
3. Polyamide web and Mica foil, with slightly higher dimensions are put onto the combined SLENTEX^{®} and Cellasto^{®} sample
4. MICA foil is applied and laminated via roll lamination, in a way, that Polyamide/Mica foil is laminated to the SLENTEX^{®} surface on one side and the Cellasto^{®} surface on the other side and the overlapping sides of polyamide /Mica to each other.

Example 3: Preparation of a symmetric thermal insulation composite with improved compressibility

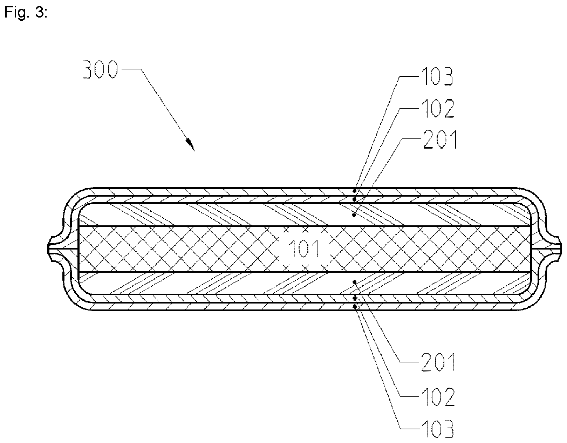

A thermal insulation composite as shown in Figure 3 in 3-4 mm thickness comprising a glass fiber reinforced aerogel blanket (SLENTEX^{®}, 2 mm thickness) as layer A), two microporous polyurethane foam sheets (Cellasto^{®}, 0.8 mm thickness each) as layers D) adjacent to the aerogel blanket with a density of 300 kg/m³, fully surrounded by a polyamide-based adhesive layer B) and two sheets (MICA foils) as layer C) with 0.10 - 0.16 mm thickness each and area weight of 150 - 190 g/m², consisting of at least a glass layer and glimmer sheet for the use as isolator sheet for cell-cell, module-module or battery pack thermal propagation prevention was prepared as follows:
1. A 10 mm SLENTEX^{®} mat is skived to a thickness of approximately 2 mm by waterjet cutting. dried in an oven
2. A 0.8 mm Cellasto^{®} sheet is placed on each side of the 2 mm SLENTEX^{®} mat
3. Polyamide web and Mica foil, with slightly higher dimensions are put onto the combined SLENTEX^{®} and Cellasto^{®} sample
4. MICA foil is applied and laminated via roll lamination, in a way, that Polyamide/Mica foil is laminated to the the Cellasto^{®} surface and the overlapping sides of polyamide /Mica to each other.

### Example 4: Preparation of a thermal insulation composite with improved compressibility

A thermal insulation composite as shown in Figure 1 in 3-5 mm thickness comprising a glass fiber reinforced aerogel blanket (SLENTEX^{®}, 2 mm thickness) as layer A), an open cell polyurethane flexible foam (2 mm thickness) as layer D) with a free rise density of < 100 kg/m³, fully surrounded by a polyamide-based adhesive layer B) and two sheets (MICA foils) as layer C) with 0.10 - 0.16 mm thickness each and area weight of 150 - 190 g/m², consisting of at least a glass layer and glimmer sheet for the use as isolator sheet for cell-cell, module-module or battery pack thermal propagation prevention was prepared as follows:
1. A 10 mm SLENTEX^{®} mat is skived to a thickness of approximately 2 mm by waterjet cutting. dried in an oven
2. A 2 mm polyurethane flexible foam sheet is placed on top of the 2 mm SLENTEX^{®} mat
3. Polyamide web and Mica foil, with slightly higher dimensions are put onto the combined SLENTEX^{®} and polyurethane flexible foam sample
4. MICA foil is applied and laminated via roll lamination, in a way, that Polyamide/Mica foil is laminated to the SLENTEX^{®} surface on one side and the polyurethane flexible foam surface on the other side and the overlapping sides of polyamide /Mica to each other. During this process the polyurethane flexible foam is slightly compressed.

**Table 1: Layer structure and properties of the composites of Examples 1 -3 and Comparative Examples C1 and C2**

| Example | Layout | Layer A | Layer B | Layer C | Layer D | Resistant to torch | Hot press test (600°C, 6 bar) | Thermal conductivity [mW/m*K] | Compression set at 40% [kPa] |
|---|---|---|---|---|---|---|---|---|---|
| C1 | A | Slentex (2 mm) | - | - | - | no | Pass | 19 | 103 |
| 1a | CBABC | Slentex (2 mm) | Polyamide web | MICA foil | - | > 1100°C for > 6 min | Pass | | 294 |
| 1b | CBABC | Slentex (2 mm) | Polyamide web | Ceramic foil | - | > 1000°C for > 6 min | Pass | | |
| 1c | CBABC | OCMF-SA (2 mm) | Polyamide web | MICA foil | - | > 1100°C for > 6 min | Pass | | |
| 2 | CBADBC | Slentex (2 mm) | Polyamide web | MICA foil | Cellasto (0.8 mm) | | Pass | | 156 |
| 3 | CBDADBC | Slentex (2 mm) | Polyamide web | MICA foil | Cellasto (0.8 mm) | | Pass | | 131 |
| C2 | AD | Slentex (2 mm) | | | Open cell PU foam (5 mm) | | Pass | | |
| 4a | CBADBC | Slentex (2 mm) | Polyamide web | MICA foil | Open cell PU foam (1 mm) | | Pass | | |
| 4b | CBDADBC | Slentex (2 mm) | Polyamide web | MICA foil | Open cell PU foam (1 mm) | | Pass | | |

## Claims

1. A thermal insulation composite comprising
i) at least one aerogel layer A),
ii) at least one binder layer B),
iii) at least one fire-resistant layer C), and
iv) optionally at least one compressible layer D).

2. A thermal insulation composite as defined in claim 1 consisting of at least one aerogel layer A), optionally at least one compressible layer D), two binder layers B), and two fire resistant layers C) with the layer structure C-B-A-B-C, C-B-A-D-B-C or C-B-D-A-D-B-C.

3. A thermal insulation composite as defined in claim 1 or 2, wherein the at least one aerogel layer A) and optionally at least one compressible layer D) is sandwiched between and fully encapsulated by the binder layer B) and the fire-resistant layer C).

4. A thermal insulation composite as defined in any of claims 1 to 3 having a thickness in the range from 0.1 to 10 mm.

5. A thermal insulation composite as defined in any of claims 1 to 4, wherein the at least one aerogel layer A) comprises an open-celled polymer foam as reinforcement.

6. A thermal insulation composite as defined in any of claims 1 to 5, wherein the at least one aerogel layer A) is a monolithic silica-based aerogel layer which is reinforced with an open-celled melamine-formaldehyde foam.

7. A thermal insulation composite as defined in any of claims 1 to 6, wherein the at least one binder layer B) consists of a polyamide fiber web.

8. A thermal insulation composite as defined in any of claims 1 to 6, wherein the at least one binder layer B) consists of a thermoplastic elastomer.

9. A thermal insulation composite as defined in any of claims 1 to 8, wherein the at least one fire resistant layer C) consists of mica and/or glass.

10. A thermal insulation composite as defined in any of claims 1 to 9, wherein the at least one compressible layer D) is selected from of a microcellular polyurethane elastomer with a density in the range from 350 to 650 kg/m³ and a pore volume in the range from 50 to 63% and an open-celled polyurethan foam with a density in the range from 50 to 300 kg/m³.

11. A process for preparing a thermal insulation composite as defined in any of claims 1 to 10, comprising the step of laminating the at least one binder layer B) and at least one fire resistant layer C) and optionally the at least one layer D) onto at least one surface of the aerogel layer A).

12. A process as defined in claim 11, comprising the steps of
a) providing an aerogel layer A) with a thickness in the range from 1 to 8 mm
b) applying binder layers B) and fire resistant layers C) on two opposite surfaces of the aerogel layer A) with overlapping areas,
c) laminating the binder layers B) and fire resistant layers C) and optionally the at least one layer D) onto the aerogel layer A) and pressing the overlapping aeras together to fully encapsulate the monolithic aerogel layer A).

13. Use of the thermal insulation composite as defined in any of claims 1 to 10 in building and construction, refrigeration appliance, electronic devices, aerospace and batteries.
